Europäisches Patentamt

European Patent Office

Office européen des brevets

(19)

(11) Veröffentlichungsnummer: **0 133 925**
**A1**

(12) EUROPÄISCHE PATENTANMELDUNG

(21) Anmeldenummer: **84108019.5**

(22) Anmeldetag: **09.07.84**

(51) Int. Cl.⁴: **H 05 B 7/06,** F 27 D 11/10

(30) Priorität: **28.07.83 CH 4132/83**

(43) Veröffentlichungstag der Anmeldung: **13.03.85**
**Patentblatt 85/11**

(84) Benannte Vertragsstaaten: **AT BE CH DE FR GB IT LI SE**

(71) Anmelder: **BBC Aktiengesellschaft Brown, Boveri & Cie.,**
**Haselstrasse, CH-5401 Baden (CH)**

(72) Erfinder: **Bühler, Karl, Oberdorfstrasse 28,**
**CH-5415 Nussbaumen (CH)**

(54) **Bodenelektrodenanordnung für einen Gleichstromlichtbogenofen.**

(57) Um eine Bodenelektrode (7a, b, c, d), deren Querschnitt sich zum Ofengefäßinneren hin verjüngt von außen in Richtung des Ofengefäßinneren anzubauen zu können, ist die Bodenelektrode (7a, b, c, d) mit einem sie zu einer Einheit ergänzenden Formkörper (10, 10') aus feuerfestem Werkstoff versehen. Dabei weist die Bodenelektrode (7a, b, c, d) mitsamt dem sie zu einer Einheit ergänzenden Formkörper (10, 10') einen in Richtung des Ofengefäßinneren erweiternden oder höchstens gleichbleibenden Querschnitt auf.

Durch den Ausbau der Bodenelektrode (7a, b, c, d) von außen nach innen können umfangreiche Arbeiten eingespart werden. Auch wird der Ausbau der Bodenelektrode (7a, b, c, d) dadurch erleichtert, daß weder das Anschlußstück (17) noch die elektrischen Zuleitungen (22) entfernt werden müssen.

1

KT/eh   88/83
28.7.83

- 1 -

## Bodenelektrodenanordnung für einen Gleichstromlichtbogenofen

Die Erfindung bezieht sich auf einen elektrischen Ofen nach dem Gattungsbegriff des Patentanspruchs 1. Ein derartiger Ofen ist beispielsweise aus der CH-PS 452 730 bekannt.

Die Fortschritte in der Entwicklung von Halbleiterbauelementen in den vergangenen Jahren waren Anlass dafür, Gleichstromlichtbogenöfen in zunehmendem Ausmass in der Eisen- und Stahlindustrie zur Erschmelzung, vornehmlich von Elektrostahl, einzusetzen.

Aufbau und Wirkungsweise von Gleichstromlichtbogenöfen sind beispielsweise aus der Zeitschrift "Stahl und Eisen", 103 (1983) Nr. 3, vom 14. Februar 1983, Seiten 133 bis 137 bekannt.

Zur Optimierung der elektrischen bzw. thermischen Verhältnisse hat es sich beim Gleichstromlichtbogenofen als vorteilhaft erwiesen, den Lichtbogen zwischen einer oder mehreren oberhalb des Schmelzgutes angeordneten Elektrode(n) und dem Schmelzgut selbst auszubilden. Für die Rückleitung des Gleichstromes ist mindestens eine im Boden des Ofens und mit der Schmelze in Berührung stehende Elektrode, die Bodenelektrode, vorgesehen.

Die Bodenelektrode ist einer anhaltenden sehr hohen thermischen Beanspruchung ausgesetzt, für welche sich Materialien mit einem hohen Erweichungs- und Schmelzpunkt, beispielsweise Graphit, eignen. Bei Verwendung von Kohlenstoffelektroden wird aber die Schmelze einerseits aufgekohlt. Dies ist jedoch insbesondere bei der Herstellung von niedrig gekohlten Stählen unerwünscht. Andererseits wird die Kohlenstoffelektrode aufgezehrt, wodurch der Ofenboden geschwächt und die elektrische Leistungsübertragung ungünstig beeinflusst werden kann.

Nach dem Lösungsvorschlag der CH-PS 452 730 werden Bodenelektroden verwendet, deren mit der Schmelze in Verbindung stehende Zone dieselben chemischen Gehalte aufweist, wie die Schmelze selbst. Die Kühlung erfolgt dabei an dem dem Ofengefäss abgewandten Endbereich der Bodenelektrode durch Konvektion mit Luft, wobei dieser Endbereich aus einem Metall mit guten wärmeleitenden und stromführenden Eigenschaften, beispielsweise Kufper, besteht. Es handelt sich hierbei um eine sogenannte Zweistoffelektrode.

Die hohe thermische Beanspruchung der Bodenelektrode und die damit verbundenen Verschleisserscheinungen machen es notwendig, die Bodenelektrode von Zeit zu Zeit auszuwechseln, d.h. die verbrauchte aus dem Ofenherd zu demontieren und durch eine neue zu ersetzen.

Diese Bodenelektrode ist konisch sich in Richtung Gefässinnerem verjüngend ausgebildet. Diese Ausbildungsform ermöglicht den Einbau und Ausbau der Bodenelektrode von ausserhalb des Ofengefässbodens her.

Diese Art der Bodenelektrodenentfernung ist jedoch sehr aufwendig, und zwar aus folgenden Gründen:

Die im Ofen verbleibenden erstarrten Schmelzreste bilden gemeinsam mit den im elektrodennahen Bereich des Feuerfestwerkstoffes des Ofenbodens inkrustierten metallischen Bestandteilen einen pilzartigen Ueberzug aus Metall und Schlacke. Ein Ausbau der Bodenelektrode ohne vorherige Entfernung dieses pilzartigen Ueberzuges ist jedoch unmöglich. Die Entfernungsarbeiten sind jedoch arbeitsintensiv und nur am erkalteten Ofengefäss auszuführen, wodurch wiederum eine zeitliche Verzögerung für die Inbetriebnahme des Ofens entsteht.

Zum eventuellen Ausstossen der Bodenelektrode aus dem Ofenboden, ist ausserdem ein zentral auf deren Stirnfläche aufgesetzter Ausdrückbolzen mit einer axial wirkenden Kraft erforderlich. Diese Ausstossoperation setzt jedoch eine zur Achse der Bodenelektrode orthogonale und eben ausgebildete Stirnfläche voraus. Durch Verschleisseinwirkung ist die dem Gefässinneren zugewandte Stirnfläche der Bodenelektrode aber mehr oder weniger deformiert und uneben und der Ausstossvorgang ist nur unter erschwerten Bedingungen und der Gefahr einer Beschädigung des Feuerfestbodens möglich.
Zudem müssen Massnahmen ergriffen werden, um die Ausstossvorrichtung im Gefässinneren zu verankern.

Bei dem Lösungsvorschlag gemäss der CH-PS 452 730 müssen ausserdem jedesmal vor dem Auswechseln der Bodenelektrode die mechanischen Befestigungen einschliesslich der elektrischen Stromzuführungskabel gelöst und entfernt werden.

Der Erfindung liegt die Aufgabe zugrunde, einen elektrischen Ofen zu schaffen, dessen Bodenelektrode leicht und mit einfachen Mitteln aus dem Ofengefässboden entfernbar ist.

Die Lösung dieser Aufgabe erfolgt durch die im Patentanspruch 1 gekennzeichnete Erfindung.

Wesentliches Kennzeichen der Erfindung ist ein leichter und gut reproduzierbarer Ausbau, vorzugsweise Ausstossen der Bodenelektrode von aussen in das Ofengefässinnere hinein. Dadurch, dass die Bodenelektrode mit einem sie zu einer Einheit ergänzenden Formteil aus feuerfestem Werkstoff umhüllt ist, besteht auf einfache Weise die Möglichkeit, die Bodenelektrode in das Ofengefässinnere hinein auszustossen, auch wenn sie sich in Richtung zum Ofengefässinneren hin verjüngt. Hierdurch werden die üblicherweise notwendigen umfangreichen Vorarbeiten zur Entfernung des pilzartigen Ueberzuges im Ofenherd, die für den Auspressvorgang der Bodenelektrode vom Gefässinneren nach aussen notwendig sind, eingespart. Abstützmittel für die Ausstossvorrichtung, die normalerweise im Ofengefäss angebracht werden müssten, entfallen ebenfalls.

Bei der Weiterbildung des Erfindungsgegenstandes gemäss Ansprüchen 2 und 3 ist das Anschlussstück als vorzugsweise aus Kupfer bestehende Kontakthülse ausgebildet, die Seitenwände der Kontakthülse erweitern sich vorzugsweise in Richtung des Ofengefässbodens, die Bodenelektrode ist auf den Seitenflächen der Kontakthülse abgestützt und das Anschlussstück ist mit gegen die Elektrode hin geschlossenen Kühlkanälen zur Flüssigkeitskühlung versehen.

Auf diese Weise wird eine guter elektrischer Kontakt und eine optimale Kühlwirkung erzielt. Da die Kühlung der Bodenelektrode mittelbar durch das flüssigkeitsgekühlte, als Kontakthülse ausgebildetes Anschlussstück erfolgt, ist ein planparalleles Anliegen der konisch ausgebildeten Seitenflächen von Bodenelektrode und Anschlussstück für einen guten Wärmeübergang von Bedeutung.

Gemäss einer Weiterbildung der Erfindung ist in der Stirnwand des Anschlussstückes mindestens ein Durchbruch vorgesehen.

Hierdurch wird der Ein- und Ausbau der Bodenelektrode wesentlich erleichtert, da weder das Anschlussstück noch die elektrischen Zuleitungen entfernt werden müssen. Die Auspressung einer verbrauchten Bodenelektrode aus dem Ofengefässboden, und zwar von aussen in das Ofengefässinnere erfolgt auf einfache Weise, indem beispielsweise ein Auspressstempel durch den Durchbruch in dem Anschlussstück direkt auf die Stirnfläche der Bodenelektrode aufgesetzt, und die zum Ausstossen erforderliche Kraft auf die Bodenelektrode ausgeübt wird.

Gemäss einer erfindungsgemässen Weiterbildung ist vorgesehen, dass das Befestigungsteil aus einem metallischen kegelstumpfartigen, eine Oeffnung aufweisenden Abschirmdach und vertikal angeordneten Haltetraversen besteht, dass das Abschirmdach nach unten offen und mit dem Ofengefässboden verbunden ist, dass die obere Fläche des Abschirmdaches mit einem Belag aus feuerfestem Werkstoff versehen ist, und dass die Bodenelektrode durch die Oeffnung des Abschirmdaches hindurchragt und sich auf der Kontakthülse abstützt.
Diese Befestigungsanordnung ermöglicht einmal eine sichere Befestigung des Anschlussstückes mitsamt Bodenelektrode unter allen Betriebsbedingungen des Ofens, beispielsweise beim Chargieren, beim Schmelzen und Kippen und bietet zum anderen Sicherheit bei eventuellen unvorhergesehenen Ofendurchbrüchen.
Ein Schutzdach aus vorzugsweise Feuerfestwerkstoff über dem Ort der Wasserkühlung und unter dem Ofengefässboden verhindert, dass bei einem eventuellen Ofenbodendurchbruch in der Nähe der Bodenelektrode das flüssige Metall an die wassergekühlten Teile gelangen kann, d.h. abgeleitet wird. Darüber hinaus dient das Schutzdach zur Abschirmung der Zuleitungsrohre, Schläuche, wassergekühlten Stromleitungen und -Kabeln etc.

Nach der Weiterbildung der Erfindung können sowohl einstückig ausgebildete, als auch Zweistoff-Bodenelektroden leicht aus dem Ofengefässboden von aussen in Richtung des Ofengefässinneren entfernt werden. Die gemäss einer Weiterbildung des Erfindungsgegenstandes gewählte Dimensionierung, hinsichtlich sich verjüngenden Querschnitts der Bodenelektrode in Richtung des Ofengefässinneren, hat sich neben einer vorteilhaften Auswirkung auf elektrische und thermische Kenngrössen der Bodenelektrode ebenso günstig auf deren Auspressbarkeit aus dem Ofengefässboden erwiesen.

Die Erfindung wird nachstehend anhand von Ausführungsbeispielen in der Zeichnung näher erläutert.

Es zeigt:

Fig. 1    einen Vertikalschnitt durch den elektrischen Ofen mit einer Bodenelektrode,

Fig. 2    einen Vertikalschnitt durch die erfindungsgemässe Bodenelektrode in einem ersten Ausführungsbeispiel gemäss Fig. 1, jedoch in vergrösserter Darstellung,

Fig. 3    einen Vertikalschnitt durch die erfindungsgemässe Bodenelektrode in einem weiteren Ausführungsbeispiel,

Fig. 4    einen Vertikalschnitt durch die erfindungsgemässe Bodenelektrode in einem weiteren Ausführungsbeispiel,

Fig. 5    einen Vertikalschnitt durch die erfindungsgemässe Zweistoff-Bodenelektrode,

Fig. 6 einen teilweisen Vertikalschnitt durch den Ofengefässboden mit der erfindungsgemässen Bodenelektrode
gemäss Fig. 1.

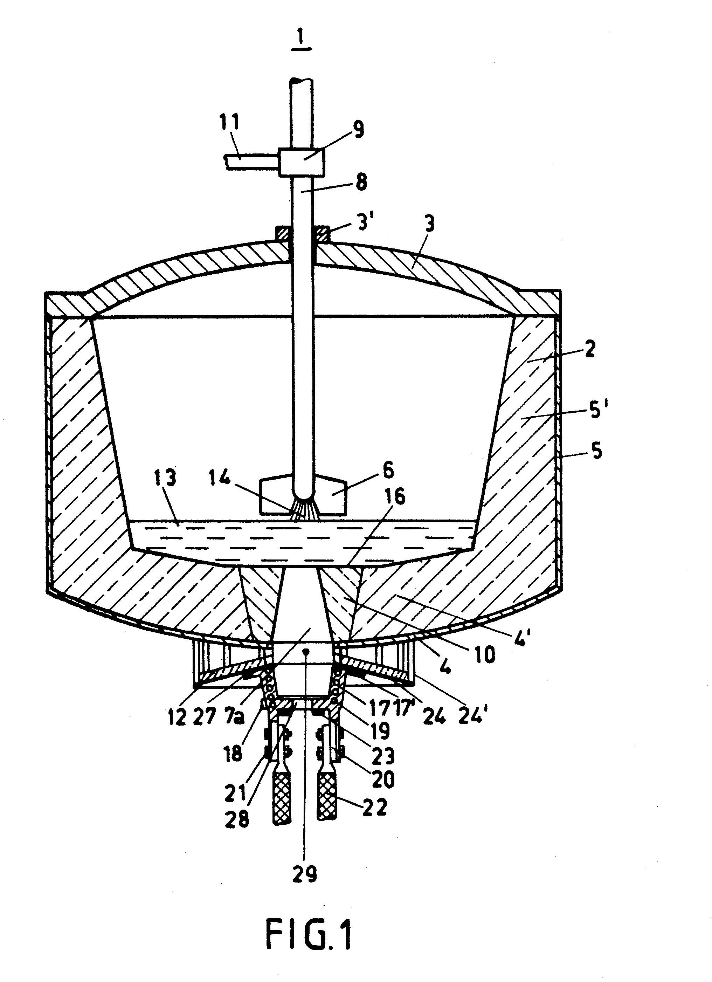

Fig. 1 zeigt den Lichtbogenofen 1 mit Ofengefäss 2 und
Ofendeckel 3, wobei das Ofengefäss 2 aus dem Gefässboden
4, der Gefässwand 5, der feuerfesten Auskleidung des
Ofenbodens 4', sowie der feuerfesten Auskleidung der
Gefässwand 5' besteht. Oberhalb des Schmelzbades 13
ist eine Kohlenstoffelektrode 8 angeordnet, welche durch
eine Oeffnung des Ofendeckels 3 hindurchragt. Zur Kühlung
der Elektrode 8 ist ein Kühlring 3' angeordnet. Die
Elektrode 8 ist in einer Halterung 9 eines Elektrodentragarmes 11 gehalten. Der Elektrodentragarm 11 ist wiederum
mit einer in Fig. 1 nicht dargestellten Elektrodenreguliereinrichtung verbunden.
In dem Ofengefäss 5, 5' befindet sich eine Ofentür 6
und zwischen der Elektrode 8 und dem Schmelzbad 13 ist
ein Lichtbogen 14 ausgebildet.
Im Gefässboden 4, 4' ist eine beispielsweise Ausführungsform der erfindungsgemässen Bodenelektrode 7a zu sehen,
welche von dem sie ergänzenden Teil 10 aus feuerfestem
Werkstoff hülsenartig umschlossen ist. In der beispielsweisen Ausführungsform gemäss Fig. 1 weist die Bodenelektrode 7a eine konische, sich in Richtung des Gefässinneren verjüngende Form auf, welche sich vom Ofengefässboden 4 bis zur Ofenherdfläche 16 erstreckt. Im Gegensatz
zur sich verjüngenden Gestalt der Bodenelektrode 7a,
erweitert sich der sie ergänzende Teil 10 in Richtung
zum Gefässinneren hin. Die Bodenelektrode 7a wird unterhalb des Ofengefässbodens 4 durch ein wassergekühltes,
als Kontakthülse ausgebildetes Anschlussstück 17 gehalten,
welches gleichzeitig zur Verbindung der elektrischen
Stromzuführung dient. Die Bodenelektrode 7a ist mittels
einer Schraubverbindung 23 an der Stirnfläche des Anschlussstückes 17 befestigt. Die Bodenelektrode 7a liegt mit ihren konisch ausgebildeten Seitenwänden an den ebenfalls konischen, zum Ofenboden 3 hin sich erweiternden inneren Seitenflächen der Kontakthülse an, wodurch eine gute elektrische Verbindung und Wärmeleitung zwischen beiden Teilen 7a und 17 hergestellt wird. An dem Anschlussstück 17 sind Kontaktlaschen 20 angeordnet, die einstückig mit der Kontakthülse ausgebildet sind.

In Fig. 1 ist ein Teil des elektrischen Stromzuführungskabels 22 zu sehen, das mittels Schraubverbindung 21 mit den Kontaktlaschen 20 des Anschlussstückes 17 verbunden ist. Das Anschlussstück 17 ist mit Kühlkanälen 19 sowie mit einem Kühlkanaleintrittsstutzen 18 versehen. Eine Kühlflüssigkeit, vornehmlich Wasser, wird durch den Eintrittsstutzen 18 den Kühlkanälen 19 zugeführt. Es durchströmt die Kühlkanäle 19 des Anschlussstückes 17 in spiralförmiger Anordnung aufwärts und kühlt somit die Bodenelektrode 7a auf indirekte Weise. Der Kühlflüssigkeitsaustrittsstutzen des Anschlussstückes 17 befindet sich auf der gleichen Ebene wie der Eintrittsstutzen 18 und ist deshalb in Fig. 1 nicht zu sehen. Die Halterung der Bodenelektrode 7a geschieht mittels eines Befestigungsteiles, welche aus einem metallischen kegelstumpfartigen Abschirmdach 24 und vertikalen Haltetraversen 24' besteht, wobei das Abschirmdach 24 in bezug auf die Ofenachse mindestens im wesentlichen zentral und nach unten offen angeordnet und mittels der Haltetraversen 24' mit dem Ofengefässboden 4 fest verbunden ist. Die Bodenelektrode 7a ragt durch die Oeffnung des Abschirmdaches hindurch und stützt sich auf der Kontakthülse ab, wobei das Anschlussstück 17 unter Einfügung einer elektrisch isolierenden Zwischenschicht 27 an der Unterseite des Abschirmdaches 24 befestigt ist.

Bei einer allfälligen Demontage der Bodenelektrode 7a wird nur die Verschraubung 23 gelöst. An die, dem Gefässinneren abgewandten Stirnfläche der Bodenelektrode 7a wird beispielsweise ein in Fig. 1 nicht dargestellter Bolzen einer Auspressvorrichtung durch den Durchbruch 28 in der Stirnfläche 28 des Anschlussstückes 17 auf die Stirnfläche der Bodenelektrode 7a aufgesetzt und auf die Bodenelektrode 7a, mitsamt dem sie ergänzenden Teil 10 eine für den Ausstossvorgang erforderliche Kraft aufgebracht. Auf diese Weise kann die Bodenelektrode 7a mitsamt dem sie umhüllenden Teil 10 leicht von aussen in das Ofengefässinnere hinein entfernt werden. Da im Gegensatz zu der der Schmelze zugewandten Stirnfläche der Bodenelektrode 7a die Stirnfläche, auf der der Auspressstempel anliegt, genau definiert ist, so kann die Auspressung der Bodenelektrode 7a aus dem Ofengefässboden 4, 4' in jedem Fall gut reproduzierbar wiederholt werden.

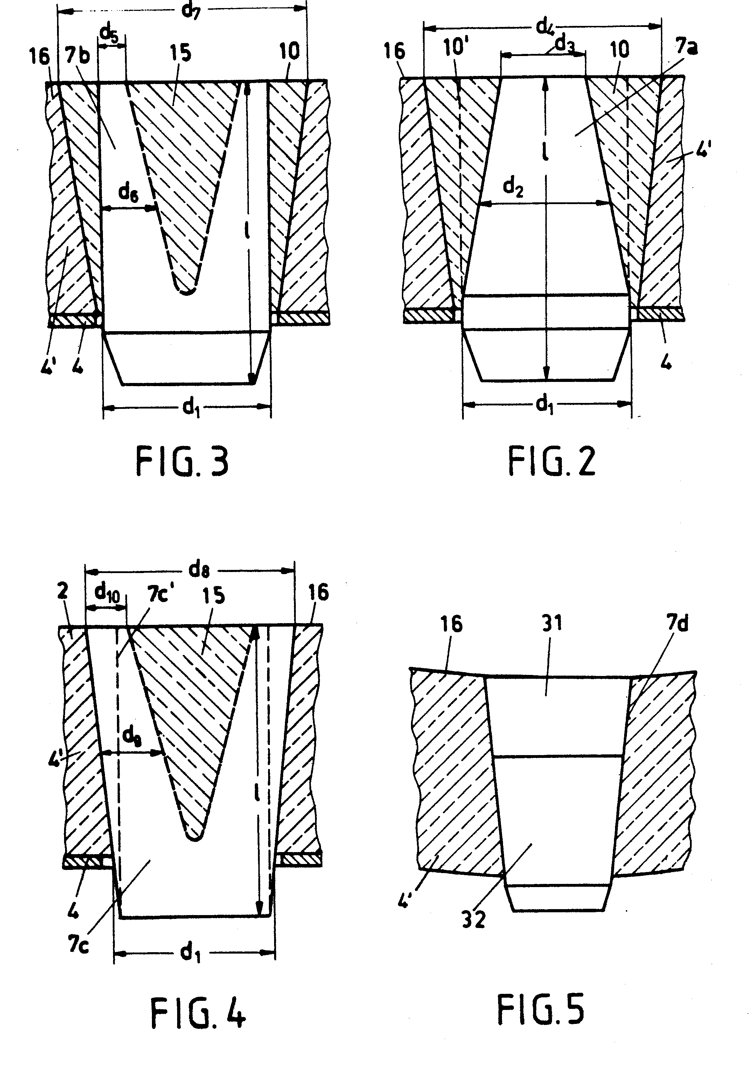

Fig. 2 zeigt einen Vertikalschnitt durch die erfindungsgemässe Bodenelektrode in einem ersten Ausführungsbeispiel, gemäss Fig. 1, jedoch in vergrösserter Darstellung. Die Bodenelektrode 7a mit dem Durchmesser $d_1$ im Bereich des Ofengefässbodens 3 verjüngt sich konisch bis zur Herdfläche 16 hin und weist dort einen Durchmesser $d_3$ auf. Der die Bodenelektrode 7a ergänzende Teil 10 hingegen, welcher im Bereich des Ofenbodens 3 annähernd ebenfalls einen Durchmesser $d_1$ aufweist, erweitert sich und hat in der Herdfläche den Durchmesser $d_4$. Durch die strichlierte Linie 10' ist angedeutet, dass der Teil 10 ebenfalls zylindrisch ausgebildet sein könnte, ohne dass der Auspressvorgang der Bodenelektrode 7a aus dem Ofenboden 5 dadurch wesentlich erschwert würde. Der mittlere Durchmesser der Bodenelektrode 7a ist mit $d_2$ bezeichnet und die Gesamtlänge der Bodenelektrode 7a mit $\ell$ .

Fig. 3 zeigt einen Vertikalschnitt durch eine weitere erfindungsgemässe Bodenelektrode 7b. Die Bodenelektrode 7b weist eine zylindrische Gestalt auf und ist gleichfalls mit dem ergänzenden Teil 10 umhüllt, der sich wiederum in Richtung des Gefässinneren hin, erweitert. Auf diese Weise wird die Auspressung der Bodenelektrode 7b aus dem Ofengefässboden wiederum wesentlich erleichtert. Die Bodenelektrode 7b weist - durch die strichlierte Linie ersichtlich - einen Formkörper 15 aus einem feuerfesten Werkstoff auf, welcher in einer trichterförmigen Ausnehmung innerhalb der Bodenelektrode 7b angeordnet ist, wobei sich die Ausnehmung von der dem Gefässinneren zugewandten Stirnfläche der Bodenelektrode 7b in axialer Richtung sich bis zum Bereich des Ofengefässbodens 4 erstreckt. Der Formkörper 15 dient zum Zweck der Querschnittsverringerung der Bodenelektrode 7b in Richtung Ofengefässinneres, wodurch deren Verlustleistung reduziert wird. Im Ofengefässboden 4 weist die Elektrode 7b einen Durchmesser von $d_1$ auf, der sich durch den Formkörper 15 in der Ofenherdfläche 16 bis zur radialen Ringbreite $d_5$ verringert. Die Elektrode 7b hat mitsamt den sie ergänzenden Teil 10 in der Ofenherdfläche 16 einen Durchmesser $d_7$. Der mittlere Durchmesser ist mit $d_6$ bezeichnet und die Länge wiederum mit $\ell$.

Fig. 4 zeigt die Bodenelektrode 7c, deren äusserer Durchmesser sich in Richtung Gefässinneres erweitert oder höchstens, durch die strichlierten Linien 7c' angedeutet, gleichbleibt. Die Bodenelektrode 7c weist keinen sie ergänzendes Teil auf, weil die Auspressung nach dem Gefässinneren hin auch ohne dieses gewährleistet ist. Jedoch ist die Bodenelektrode 7c mit einem trichterförmigen Formkörper 15 versehen, welcher, wie bereits in der Beschreibung von Fig. 3 ausgeführt, der Begrenzung der Verlustleistung dient. Die Bodenelektrode 7c hat im Ofengefässboden 4 einen Durchmesser $d_1$, in der Ofenherdfläche 16 einen äusseren Durchmesser $d_8$, jedoch in der Ofenherdfläche 16 nur eine metallisch wirksame Ringbreite $d_{10}$. Der mittlere Durchmesser ist mit $d_9$ bzeichnet, die Länge wiederum mit $\ell$.

In Fig. 5 ist eine Zweistoff-Bodenelektrode 7d dargestellt, welche aus einem der Ofenherdfläche 16 zugewandten Eisenlegierungsteil 31 und dem Kupferteil 32 besteht. Beide Teile 31, 32 sind metallurgisch miteinander verbunden, wobei die Auspressbarkeit der Elektrode 7b von aussen in Richtung des Gefässinneren ohne weiteres gewährleistet ist.

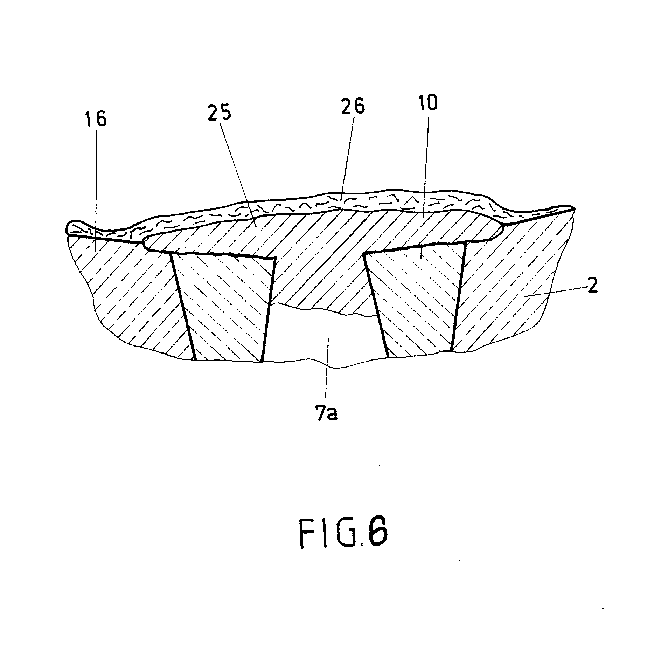

Fig. 6 zeigt einen teilweisen Vertikalschnitt durch den Ofengefässboden 4', und die Bodenelektrode 7a in vergrösserter Darstellung.

In Fig. 6 sind die pilzförmigen Metall- 25 bzw. Schlackenzonen 26 zu erkennen, welche in die feuerfeste Auskleidung des Ofengefässbodens 4' in die Bodenelektrode 7a und in den sie ergänzenden Teil 10 penetriert sind und welche nur sehr schwer zu entfernen sind. Ein Wegräumen der Schichten 25, 26 wäre aber unabdingbare Voraussetzung für das Herausstossen der Bodenelektrode 7a von dem Gefässinneren nach Aussen.

Mit der erfindungsgemässen Bodenelektrode 7a, b, c, d ist jedoch ein Entfernen aus dem Ofengefässboden 4' leicht, ohne vorherige umfangreiche Räumarbeiten möglich.

Es versteht sich von selbst, dass die Bodenelektrode 7a, b, c, d sowohl eine runde, als auch eine polygonale Querschnittsform aufweisen kann.

P a t e n t a n s p r ü c h e

1. Elektrischer Ofen, insbesondere Gleichstromlichtbogenofen zum Schmelzen von Metallen, mit einer auswechselbaren Bodenelektrode (7a, b, c, d), dadurch
gekennzeichnet, dass die Bodenelektrode (7c, d) oder
die Bodenelektrode (7a, b) mit einem sie zu einer
Einheit ergänzenden Formkörper (10, 10'; 15) aus
feuerfestem Werkstoff einen sich in Richtung des
Ofengefässinneren erweiternden oder einen höchstens
gleichbleibenden Querschnitt aufweist, und dass die
Bodenelektrode (7a, b, c, d) in Richtung des Ofengefässinneren entfernbar ist.

2. Elektrischer Ofen nach Anspruch 1, bei dem die Bodenelektrode (7a, b, c, d) durch ein unterhalb des Ofengefässbodens (4) sich befindendes Anschlussstück
(17) gehalten ist, dadurch gekennzeichnet, dass das
Anschlussstück (17) als vorzugsweise aus Kupfer bestehende, das untere Elektrodenende umfassende Kontakthülse ausgebildet ist, dass die Kontaktflächen
der Kontakthülse sich vorzugsweise in Richtung des
Ofengefässbodens (4) erweitern, und dass die Bodenelektrode (7a, b, c, d) auf den Kontaktflächen der
Kontakthülse grossflächig abgestützt ist.

3. Elektrischer Ofen nach Anspruch 2, dadurch gekennzeichnet, dass das Anschlussstück (17) mit gegen
die Elektrode (7a, b, c, d) geschlossenen Kühlkanälen
(19) zur Flüssigkeitskühlung versehen ist.

4. Elektrischer Ofen nach Anspruch 2, dadurch gekennzeichnet, dass in der Stirnwand des Anschlussstückes
(17) mindestens ein Durchbruch (28) vorgesehen ist.

5. Elektrischer Ofen nach Anspruch 1, mit einem Befestigungsteil (24, 24'), dadurch gekennzeichnet, dass das Befestigungsteil (24, 24') aus einem metallischen kegelstumpfartigen, eine Oeffnung aufweisenden Abschirmdach (24) und vertikal angeordneten Haltetraversen (24') besteht, dass das Abschirmdach (24) nach unten offen und mit dem Ofengefässboden (4) fest verbunden ist, dass die obere Fläche des Abschirmdaches (24) mit einem Belag (12) aus feuerfestem Werkstoff versehen ist, und dass die Bodenelektrode (7a, b, c, d) durch die Oeffnung des Abschirmdaches (24) hindurchragt und sich auf der Kontakthülse abstützt.

6. Elektrischer Ofen nach Anspruch 1, dadurch gekennzeichnet, dass die einstückig ausgebildete Bodenelektrode (7a, b, c) aus einer Eisenlegierung (z.B. 99,9 % Fe) besteht.

7. Elektrischer Ofen nach mindestens einem der Ansprüche 1 bis 5, dadurch gekennzeichnet, dass die Bodenelektrode (7d) mindestens aus zwei Werkstoffen besteht, wobei der dem Schmelzbad (13) zugewandte Teil aus einer dem Schmelzbad (13) ähnliche chemische Gehalte aufweisenden Legierung (31) und der zweite Teil aus Kupfer (32) besteht, und dass der dem Schmelzbad (13) zugewandte Teil (31) der Bodenelektrode (7d) $\frac{1}{8}$ bis $\frac{1}{2}$ deren Gesamtlänge beträgt.

FIG.1

FIG. 3

FIG. 2

FIG. 4

FIG. 5

0133925

FIG.6

**Europäisches Patentamt**

# EUROPÄISCHER RECHERCHENBERICHT

0133925

Nummer der Anmeldung

EP 84 10 8019

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-3 717 713 (SCHLIENGER)<br>* Spalte 3, Zeilen 6-29; Figur 1 * | 1,2 | H 05 B .7/06<br>F 27 D 11/10 |
| A | FR-A-2 381 987 (A.S.E.A.)<br>* Seite 2, Zeile 23 - Seite 3, Zeile 39; Figuren 1,2 * | 1,3,6 | |
| A | FR-A-2 292 397 (A.S.E.A.)<br>* Seite 2, Zeile 7 - Seite 3, Zeile 2; Figur 1 * | 1-3,7 | |
| A | DE-C- 426 584 (RUETGERSWERKE)<br>* Seite 2, Zeilen 9-28 * | 2,3 | |
| A | EP-A-0 058 817 (M.A.N.)<br>* Seite 5, Zeile 20 - Seite 6, Zeile 25; Figur 1 * | 5,6 | RECHERCHIERTE SACHGEBIETE (Int. Cl.4) |
| A | DE-A-2 718 293 (A.S.E.A.) | | H 05 B<br>F 27 D<br>F 27 B<br>B 22 D |
| A | FR-A- 518 356 (KRUPP) | | |
| A | FR-A- 421 292 (GESELLSCHAFT FÜR ELEKTROSTAHLANLAGEN) | | |
| A | US-A-3 708 599 (KRAUSE) | | |

-/-

Der vorliegende Recherchenbericht wurde für alle Patentansprüche erstellt.

| Recherchenort | Abschlußdatum der Recherche | Prüfer |
|---|---|---|
| DEN HAAG | 30-10-1984 | RAUSCH R.G. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82

## EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | FR-A-1 425 084 (MORGAN REFR.) | | |
| | ----- | | |

RECHERCHIERTE SACHGEBIETE (Int. Cl.4)

Der vorliegende Recherchenbericht wurde für alle Patentansprüche erstellt.

| Recherchenort DEN HAAG | Abschlußdatum der Recherche 30-10-1984 | Prüfer RAUSCH R.G. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, überein-stimmendes Dokument